# EUROPEAN PATENT APPLICATION

(11) **EP 4 802 899 A1**
(43) Date of publication of application: **09.09.2026**
(21) Application number: 26162428.2
(22) Date of filing: 04.03.2026
(51) Int. Cl.: A21C 15/02

(54) **SYSTEM FOR FORMING LAYERED FLAT BAKED GOODS WITH VISCOUS EDIBLE MATERIAL**

(30) Priority: 05.03.2025 NL 4000015
(71) Applicant: Royal Houdijk B.V., 3133 KS Vlaardingen (NL)
(72) Inventor: HOUDIJK, Bart, VLAARDINGEN (NL)
(74) Representative: Algemeen Octrooi- en Merkenbureau B.V.

(57) **Abstract**

A system for forming layered flat baked goods from at least one flat baked good and a layer of viscous edible material deposited onto the flat baked good, the system comprising: a first conveyor assembly arranged for supplying a plurality of flat baked goods and configured to lower the temperature of the flat baked goods to a predefined reduced temperature; a deposition means for depositing the viscous edible material onto the flat baked goods, wherein the deposition means are configured to deposit the viscous edible material at a controlled elevated processing temperature to provide a predefined viscosity level of the deposited viscous edible material; wherein the first conveyor assembly is further configured to enable setting the reduced temperature of the flat baked goods to a predefined value, to reflect a selected regulated temperature difference between the flat baked goods and the viscous edible material, thereby inducing rapid heat transfer upon deposition to accelerate setting and enhance adhesion of the edible material to the flat baked goods.

## Description

### TECHNICAL FIELD

The present invention generally relates to the field of food processing systems, and more particularly to the field of automated systems for forming products from flat baked goods with a layer of viscous edible material.

### BACKGROUND

Nowadays, automated systems for forming layered flat baked goods from flat baked goods, such as cookies or biscuits and a layer of viscous edible material, often involve the use of a gripper or manipulator that handles the baked goods to ensure proper alignment before applying a layer of cream or other edible material. Once properly aligned, the cream is deposited onto the cookies, and optionally when manufacturing sandwich products, another cookie is placed on top to form the sandwich product.

A notable disadvantage of these conventional systems is the inherent complexity and limitations in handling viscous edible materials, such as cream or chocolate. To ensure the edible material can be deposited without clogging the deposition nozzles, it must maintain a sufficiently low viscosity. However, this presents a further challenge, as once deposited, the material still needs to adhere effectively to the cookie layers. Achieving this requires the edible material to cool down after deposition, allowing it to solidify and bond with the cookies. As a result, current systems often employ long processing lines, sometimes extending 10 or more meters, to allow for sufficient cooling time before the sandwiches can be further handled or packaged.

These lengthy processing lines are undesirable for several reasons. First, they occupy significant floor space, making production facilities less efficient in terms of layout. Moreover, while additional freezing units can be used to accelerate cooling, these solutions are also inefficient. The reason for this inefficiency lies in the insulating properties of the cookies, which retain heat and slow down the cooling process. Since the cookies act as insulators, cooling the edible material, such as cream or chocolate, becomes less effective, requiring additional time and energy to bring the product to a stable temperature. This process slows down production and increases operational costs.

It is therefore a goal of the present invention to provide an improved system for forming layered flat baked goods that addresses at least some of these inefficiencies. The invention seeks to reduce the length of the processing lines, obviate the necessity of using additional active cooling and address the inefficiency of current solutions, thereby overcoming the above-mentioned disadvantages of the prior art at least in part.

### SUMMARY

One aspect of the present invention relates to a system for forming layered flat baked goods from at least one flat baked good, and a layer of viscous edible material deposited onto the flat baked good, the system comprising:
a first conveyor assembly, arranged for supplying a plurality of flat baked goods and configured to lower the temperature of the flat baked goods to a predefined reduced temperature;
a deposition means for depositing the viscous edible material onto the flat baked goods, wherein the deposition means are configured to deposit the viscous edible material at a controlled elevated processing temperature to provide a predefined viscosity level of the deposited viscous edible material;
wherein the first conveyor assembly is further configured to enable setting the reduced temperature of the flat baked goods to a predefined value, to reflect a selected regulated temperature difference between the flat baked goods and the viscous edible material, thereby inducing rapid heat transfer upon deposition to accelerate setting and enhance adhesion of the edible material to the flat baked goods.

Another aspect of the present invention relates to a method for forming layered flat baked goods from at least one flat baked good and a layer of viscous edible material deposited on the flat baked good, the method comprising the steps of:
supplying a plurality of flat baked goods on a first conveyor assembly;
lowering the temperature of the flat baked goods to a predefined reduced temperature;
depositing the viscous edible material onto the flat baked goods using a deposition means, wherein the edible material is deposited at a controlled elevated processing temperature selected to provide a predefined viscosity level suitable for deposition;
setting the reduced temperature of the flat baked goods to a predefined value to reflect a selected regulated temperature difference between the flat baked goods and the viscous edible material by inducing rapid heat transfer from the viscous edible material to the flat baked goods upon deposition to accelerate setting and enhance adhesion of the edible material to the flat baked goods.

Yet another aspect of the present invention relates to a deposition means for depositing a viscous edible material onto a flat baked good, the deposition means comprising:
a dispensing unit configured to deposit the viscous edible material onto the flat baked goods;
a temperature control system arranged to maintain the viscous edible material at a controlled elevated processing temperature selected to provide a predefined viscosity level suitable for deposition;
wherein the deposition means is configured to cooperate with a conveyor assembly of the system of claim 1, for the conveyor assembly to supply flat baked goods at a predefined reduced temperature to induce rapid heat transfer upon deposition, thereby accelerating setting and enhancing adhesion of the edible material to the flat baked goods.

Yet another aspect of the present invention relates to a conveyor assembly for supplying flat baked goods in a system for forming layered flat baked goods according to claim 1, the conveyor assembly comprising:
a transport mechanism arranged for conveying a plurality of flat baked goods to a deposition area;
a cooling unit configured to lower the temperature of the flat baked goods to a predefined reduced temperature;
a control system configured to enable setting the reduced temperature of the flat baked goods to a predefined value to reflect a selected regulated temperature difference between the flat baked goods and a viscous edible material to be deposited thereon, and wherein the conveyor assembly is configured to induce rapid heat transfer from the viscous edible material to the flat baked goods upon deposition, thereby accelerating setting and enhancing adhesion of the edible material to the flat baked goods.

One aspect of the present invention relates to a system for forming layered flat baked goods from at least one flat baked good and a layer of viscous edible material deposited onto the flat baked good.

A particular challenge in the prior art, especially in processes where adhesion of a deposited material is a concern, has been managing the thermal state of the components. Some known methods have relied on the residual heat of the baked good after it exits the oven. In such systems, the still-warm baked good serves to keep a deposited binder or coating in a liquid or flowable state for a longer period. This approach is taken to deliberately delay the solidification of the deposited material, thereby allowing sufficient time for subsequent processing steps, such as the application of a topping, before the binder sets. However, this principle is counterproductive when the primary objective is rapid processing and minimal production line length, as it inherently prolongs the time required for the final product to become structurally stable. The present invention is based on a completely different and counter-intuitive technical principle, which does not seek to manage or utilize residual heat to delay setting, but instead aims to drastically accelerate the solidification of a deposited viscous material to improve production efficiency and reduce the system's footprint.

A central aspect of the present disclosure is that the first conveyor assembly is configured to cool the flat baked goods to a predefined reduced temperature such that the flat baked goods function as a heat sink upon deposition of the viscous edible material. In this context, a 'heat sink' is understood to mean that the baked good has sufficient thermal mass and a sufficiently low temperature to rapidly absorb a significant amount of thermal energy from the hotter, viscous edible material deposited thereon. This controlled and rapid absorption of heat from the edible material is the primary mechanism that causes its accelerated setting and solidification. This principle is fundamentally different from using a warm or ambient-temperature baked good, where heat transfer is either minimal or serves the opposite purpose of maintaining fluidity.

The system is specifically configured to establish and control a significant thermal gradient between the two components at the moment of deposition. By maintaining the viscous edible material at a controlled elevated processing temperature to ensure it is flowable for deposition, while simultaneously cooling the flat baked good to a predefined reduced temperature, a large temperature difference is created. This ensures that, upon contact, thermal energy flows directionally and rapidly from the hotter edible material into the colder flat baked good. This induced, directional heat transfer is a key technical effect of the invention, leading to the accelerated setting and enhanced adhesion that overcomes the disadvantages of the prior art.

The term 'predefined reduced temperature' as used herein refers to a temperature to which the flat baked good is actively cooled and which is substantially below typical ambient or room temperatures. In embodiments, this temperature may be below 20°C, preferably within a range of 5°C to 15°C. This state is achieved using an active cooling unit and is distinct from prior art processes that merely allow a baked good to cool passively towards an ambient temperature of, for example, 20°C to 35°C. The purpose of the present invention's active cooling is not merely to cool the product eventually, but to prepare it to function as an effective heat sink for the subsequent deposition step.

A layered flat baked good may be understood as a food product comprising a base made of a baked component, such as a cookie, biscuit, or cracker, with an additional edible layer deposited on one of its main surfaces. Hence, the flat baked goods are typically bakery products with two main surfaces that are substantially planar, including but not limited to the given examples of cookies, crackers, or biscuits. Flat baked goods may come in various shapes, such as round, square, or rectangular, but their defining feature is that they possess two substantially parallel main surfaces. The term is intended to encompass products typically used in sandwich assembly processes, while excluding non-flat or irregularly shaped baked goods that are incompatible with such processes.

The formed layered flat baked good may consist of a single flat baked good with edible material on top, but in view of the present disclosure is also to be understood to include a sandwich good such as a sandwich biscuit or cookie having two or even three or more layers of flat baked goods with one or multiple layers of edible material in between two layers of the flat baked goods.

The edible layer may be understood as a viscous food substance such as cream, chocolate, or jam, which, when applied, is intended to adhere to the baked good and subsequently set to a stable consistency. Viscous edible material refers to any food substance that has a semi-solid or flowable consistency, which can be manipulated and deposited at a controlled viscosity. The term specifically excludes fully solid or hard edible products that do not require temperature control or viscosity adjustment.

The term viscosity refers to the internal resistance of a fluid to flow, and in the context of the present invention, the viscosity of the viscous edible material is relevant for deposition. The predefined viscosity may vary depending on the type of edible material and the specific requirements of the product being formed. For example, the viscosity of the edible material may fall within the broad range of 1 to 100,000 centipoise (cP), covering various cookie fillings from thin liquids to thick pastes. More typical for sandwich product applications is the medium-broad range of 10 to 50,000 cP, which includes most cookie fillings. A more specific range may be 100 to 20,000 cP, suitable for creams, batters, and nut butters, while many common applications may lie within the narrow range of 1,000 to 10,000 cP, encompassing batters, frostings, and certain melted chocolates. Examples of materials within these ranges include melted butter (18-20 cP), cream with varying fat content (e.g., 30% fat cream at 14 cP and 50% fat cream at 112 cP), melted chocolate at 120°F (approximately 17,000 cP), honey at 100°F (1,500 cP), and frosting or icing, which can range from 2,000 to 10,000 cP. These values ensure that the material can be handled by robotic manipulators without deforming while maintaining optimal texture for product formation. The viscosity of the material can be measured using standardized methods, such as those defined by ASTM D445 or ISO 3219, depending on the nature of the material and the required precision in viscosity control.

The term predefined reduced temperature refers to a temperature level that is preferably determined before operation and set according to product requirements. This temperature is selected based on the thermal properties of the baked goods and the edible material to ensure optimal heat transfer. The predefined reduced temperature is preferably adjustable via control settings within the conveyor system, allowing customization for different production scenarios. An effect of this arrangement is that it enables controlled cooling of the baked goods without requiring continuous real-time adjustments, providing a repeatable and reliable processing environment.

The controlled elevated processing temperature refers to the temperature at which the edible material is maintained before deposition. This temperature is regulated by a heating or temperature control system, such as a resistive heating element, induction heating, or a heated extrusion system. The purpose of maintaining an elevated processing temperature is to ensure the edible material remains at a viscosity suitable for precise deposition while preventing premature setting before it contacts the baked goods. The temperature is preferably not adjusted dynamically but is pre-set and may be controlled during operation.

The selected regulated temperature difference describes the intentional temperature gap between the reduced temperature of the baked goods and the elevated temperature of the edible material. This difference is relevant to achieving rapid and uniform heat transfer upon deposition. The system allows the selection of this difference based on the properties of the edible material and the desired setting time and is configured by the level in which the temperature of the baked goods is lowered. The effect of this arrangement is that it eliminates the need for prolonged cooling cycles, reducing processing time and improving production efficiency.

The induced rapid heat transfer refers to the process of transferring thermal energy from the edible material to the baked goods immediately upon deposition. This effect is primarily achieved through conduction, as the edible material contacts the cooled surface of the baked good. However, additional mechanisms, such as controlled airflow or surface texture modifications, may further enhance heat dissipation. The impact of this arrangement is that it accelerates setting, improving product integrity and reducing handling time.

Adhesion refers to the ability of the edible material to bond with the surface of the baked goods upon deposition. The adhesive properties of the edible material are influenced by its viscosity, temperature, and interaction with the baked good's surface. Optimal adhesion ensures that the edible material does not slide, separate, or become displaced during subsequent handling or packaging. The controlled thermal interaction enabled by the system ensures that adhesion occurs naturally without requiring additional stabilizing agents.

Sufficient deformation versus too much deformation defines the balance between maintaining the structure of the edible material while ensuring adequate bonding with the baked goods. Sufficient deformation refers to the degree of structural flexibility that allows the edible material to conform to the baked good's surface without losing its shape. Too much deformation occurs when the material spreads excessively, affecting product consistency and potentially compromising adhesion. The system is designed to regulate viscosity and deposition parameters to maintain this balance.

Stable consistency refers to the state in which the edible material retains its desired form after deposition. This stability may relate to its mechanical structure (ability to hold its shape), thermal properties (resistance to melting or excessive cooling), or chemical stability (prevention of phase separation). Maintaining a stable consistency ensures uniform application and prevents quality defects in the final product.

A cooling unit refers to a component of the conveyor system assembly responsible for lowering the temperature of the baked goods before deposition. This may include active refrigeration units, forced air cooling, or thermoelectric cooling elements. The function of the cooling unit is to ensure consistent temperature reduction across all baked goods to facilitate uniform heat transfer and predictable setting times for the edible material.

Depositing refers to the action of applying the edible material onto the baked goods in a controlled manner. This can be achieved through extrusion, pumping, spreading, or drizzling, depending on the characteristics of the edible material. The deposition means includes mechanisms that regulate the flow rate, placement accuracy, and shape of the applied material. An effect of this arrangement is that it allows precise application, ensuring consistent layer thickness and controlled interaction with the baked goods.

The system comprises a first conveyor assembly arranged for supplying a plurality of flat baked goods and configured to lower the temperature of the flat baked goods to a predefined reduced temperature. A conveyor assembly may be understood as a mechanical arrangement designed to transport items along a controlled path, ensuring the correct positioning and movement of the baked goods for further processing. The predefined reduced temperature refers to a set temperature level at which the baked goods are maintained before further processing, typically in a range ensuring that thermal energy is effectively transferred upon deposition of the edible layer. An effect of this arrangement is that it prepares the baked goods for optimized adhesion of the viscous edible material, reducing reliance on external cooling equipment and improving process efficiency.

The system further comprises a deposition means for depositing the viscous edible material onto the flat baked goods, wherein the deposition means are configured to deposit the viscous edible material at a controlled elevated processing temperature to provide a predefined viscosity level of the deposited viscous edible material. A deposition means may be understood as a mechanical or pneumatic device designed to apply a food substance onto a target surface in a controlled manner. A controlled elevated processing temperature refers to a maintained temperature level that ensures the edible material exhibits a predefined viscosity level suitable for precise application. An effect of this arrangement is that it ensures the edible material remains fluid enough to be dispensed effectively while maintaining its structural integrity during and after deposition. By controlling the processing temperature, the system avoids clogging of the deposition mechanism while ensuring that the deposited material forms a stable layer on the baked good.

The first conveyor assembly is further configured to enable setting the reduced temperature of the flat baked goods to a predefined value, to reflect a selected regulated temperature difference between the flat baked goods and the viscous edible material, thereby inducing rapid heat transfer upon deposition to accelerate setting and enhance adhesion of the edible material to the flat baked goods. Setting the reduced temperature refers to a controlled adjustment mechanism that allows the predefined temperature level to be determined based on processing requirements. A regulated temperature difference may be understood as a predetermined contrast in thermal energy levels between the baked goods and the edible material, which is selected to induce a specific rate of heat exchange. An effect of this arrangement is that the thermal interaction between the baked goods and the edible material facilitates immediate setting without requiring extensive cooling equipment. The controlled temperature difference ensures that heat is rapidly transferred from the edible material to the baked good, solidifying the deposited layer more quickly than in conventional methods. This results in a structurally stable product that is ready for further processing or packaging without the need for additional cooling delays.

In this system, preferably, the temperature of the viscous edible material, and hence thereby its viscosity level, is tuned to such an extent that it can be deposited with sufficient by without too much deformation, while still allowing the viscous edible material to melt together with the flat baked good on which it is deposited and optionally, also with a flat baked good placed on top of the edible, in case of a sandwich like configuration. The term predefined temperature and viscosity refers to a controlled level of thickness or fluidity that ensures the material can be manipulated without losing its shape but also bonds effectively with the baked goods. This arrangement ensures that the viscous edible material adheres properly to the baked goods, maintaining the integrity of the sandwich structure while also allowing the edible material to melt slightly to create a cohesive bond between the top and bottom baked goods.

In an example, the predefined reduced temperature of the flat baked goods is within a range of 5°C to 15°C to ensure rapid heat transfer to the viscous edible material. It may be provided that the predefined reduced temperature is selected within this range to ensure an effective thermal gradient upon deposition. An effect of this feature is that it allows consistent setting of the edible material by utilizing the temperature difference between the baked goods and the deposited layer, reducing the need for additional cooling equipment.

In an example, the controlled elevated processing temperature of the viscous edible material is in a range of 25°C to 35°C, thereby maintaining an optimal viscosity for deposition while ensuring effective setting upon contact with the flat baked goods. It may be provided that the temperature range is selected based on the flow properties of the edible material to allow uniform deposition without excessive spreading. An effect of this feature is that it ensures precise control over material viscosity, allowing predictable and reproducible deposition.

In an example, the first conveyor assembly includes an active cooling unit that utilizes forced air circulation, cryogenic cooling, or a refrigerated cooling plate to achieve the predefined reduced temperature. It may be provided that the cooling unit actively controls the temperature of the baked goods during conveyance. An effect of this feature is that it enables rapid and uniform temperature reduction of the baked goods, improving processing consistency and ensuring reliable thermal conditions before deposition.

In an example, the active cooling unit is configured to cool the flat baked goods while they are conveyed on the first conveyor assembly, thereby ensuring uniform temperature reduction prior to deposition. It may be provided that the cooling process occurs dynamically as the baked goods travel along the conveyor path. An effect of this feature is that it eliminates potential temperature inconsistencies, resulting in enhanced process stability and product uniformity.

In an example, the deposition means includes a controlled nozzle or shaping guide configured to regulate the spread of the viscous edible material upon deposition, thereby maintaining a defined shape on the flat baked goods. It may be provided that the nozzle configuration is adjustable to suit different deposition profiles. An effect of this feature is that it enables accurate application of the edible material, preventing unintended spreading or deformation.

In an example, the deposition means is further configured to adjust the deposition speed, pressure, or flow rate to control the penetration depth of the viscous edible material into porous baked goods, ensuring a controlled layer thickness and improved texture of the final product. It may be provided that the deposition parameters are selectively adjustable for different material compositions. An effect of this feature is that it ensures a balance between adhesion and stability, improving product consistency.

In an example, the system further comprises a second conveyor assembly arranged to supply a second flat baked good, wherein the second flat baked good is also cooled to a predefined reduced temperature and is placed onto the deposited viscous edible material to form a sandwich product. It may be provided that the second conveyor assembly operates in synchronization with the first conveyor assembly. An effect of this feature is that it ensures precise alignment of the sandwich components, preventing assembly defects.

In an example, the second conveyor assembly is synchronized with the first conveyor assembly to ensure precise alignment of the second flat baked good onto the deposited viscous edible material. It may be provided that the system includes an alignment mechanism to guarantee positional accuracy. An effect of this feature is that it eliminates misalignment issues, leading to improved product quality and consistency.

In an example, the combined cooling effect of the first and second flat baked goods induces uniform setting of the viscous edible material without requiring additional cooling post-sandwich formation. It may be provided that the temperature difference between the components is optimized to promote efficient heat transfer. An effect of this feature is that it accelerates production speed while reducing energy consumption.

In an example, the deposition means further comprises a rotary, extruder-based, or volumetric dispensing mechanism to ensure precise and consistent application of the viscous edible material onto the flat baked goods. It may be provided that different dispensing techniques are available for various material properties. An effect of this feature is that it enhances adaptability for different product formulations.

In an example, the deposition means is further configured to deposit the viscous edible material in a predefined pattern, including swirls, strips, or localized dollops, to enhance product aesthetics and functionality. It may be provided that the system allows programmable deposition control. An effect of this feature is that it enables decorative or functional layering for enhanced product appeal.

In an example, the first conveyor assembly includes a temperature sensor and a feedback control unit configured to monitor and maintain the reduced temperature of the flat baked goods during processing. It may be provided that real-time adjustments are performed based on sensor feedback. An effect of this feature is that it ensures temperature stability throughout the process.

In an example, the first conveyor assembly further comprises a plurality of cooling zones, each configured to progressively reduce the temperature of the flat baked goods to the predefined reduced temperature, thereby ensuring consistent cooling before deposition. It may be provided that zoned cooling is implemented to provide a gradual and controlled temperature transition. An effect of this feature is that it prevents thermal shock, reducing the risk of structural damage to the baked goods.

In an example, the system further comprises a secondary conveyor section positioned downstream of the deposition means, configured to maintain the formed cookies at ambient conditions or direct them towards a packaging unit, thereby eliminating the need for additional cooling equipment post-deposition. It may be provided that the conveyor section is designed to facilitate seamless integration with packaging operations. An effect of this feature is that it simplifies production workflows and reduces processing time.

In an example, the first conveyor assembly includes an active cooling unit, such as a refrigeration unit, a forced-air chiller, a cryogenic cooling system, or a refrigerated cooling plate. The function of this active cooling unit is to reliably and uniformly lower the temperature of the flat baked goods to the predefined reduced temperature, for example 5°C to 15°C, before they reach the deposition means. This ensures that each baked good possesses the required thermal capacity to act as a consistent and effective heat sink during the deposition of the viscous edible material, thereby ensuring a repeatable and reliable production process with uniform product quality.

In an embodiment for forming a sandwich product, the system further comprises a second conveyor assembly arranged to supply a second flat baked good. Crucially, this second flat baked good is also cooled to a predefined reduced temperature prior to being placed onto the deposited viscous edible material. The combined cooling effect of the first (bottom) and second (top) cooled flat baked goods creates a dual-sided heat sink. This configuration further accelerates the solidification process by extracting heat from the edible material from two opposing sides simultaneously. This leads to an even more rapid and uniform setting of the edible material core, significantly improving the structural integrity of the sandwich product and eliminating any need for post-sandwich formation cooling.

The deposition means is configured to deposit the viscous edible material, such as a cream or chocolate filling, at a controlled elevated processing temperature, for instance in the range of 25°C to 35°C. This temperature is selected to provide a viscosity level that is optimal for deposition-fluid enough to be dispensed accurately without clogging, yet viscous enough to maintain its shape upon deposition. The combination of this controlled, hot, viscous state of the material with the cold, heat-sink state of the baked good is what enables the unique technical effect of rapid solidification upon contact.

The above-mentioned and other features and advantages of the invention are illustrated in the following description with reference to the enclosed drawings which are provided by way of illustration only and which are not limitative to the present invention.

### BRIEF DESCRIPTION OF THE DRAWINGS

The present disclosure will be explained in more detail below by means of examples of a device according to the present disclosure shown in the drawings, in which:
Fig. 1 schematically illustrates the steps of a conventional manufacturing process for forming layered flat baked goods according to the prior art;
Fig. 2 schematically illustrates the steps of a manufacturing process for forming layered flat baked goods according to an aspect of the present invention;
Fig. 3 shows a deposition means for depositing a viscous edible material onto flat baked goods according to an aspect of the present invention;
Fig. 4 presents a low diagram of a method for producing layered flat baked goods according to an aspect the present invention.

### DETAILED DESCRIPTION

In the context of the present invention, several key terms are defined to ensure clarity and precision in the description and claims.

A flat baked good refers to a baked product characterized by an at least substantially planar shape, typically having two substantially parallel main surfaces. Examples include cookies, biscuits, crackers, and wafers. These products are generally used as bases or structural components in layered or sandwich-type confections.

A viscous edible material is a semi-fluid food substance possessing a certain controlled level of viscosity. Especially at room temperature, a viscous edible material maintains a certain level of viscosity, even at room temperature. It allowing it to be deposited in a precise and controlled manner while maintaining its structural integrity after application. Examples include creams, chocolate pastes, jams, and confectionery fillings. The viscosity of such materials is typically maintained within a predefined range to ensure uniform application without excessive spreading or deformation. The level of viscosity depends on the composition of the edible, but also on the temperature, in which an elevated temperature increases the fluidity while lowering the temperature solidifies the edible.

Deposition refers to the controlled application of viscous edible material onto flat baked goods using mechanical dispensing means. The deposition process ensures accurate placement and volume of the material, facilitating efficient assembly of layered products. Various deposition techniques may be employed, including extrusion, nozzle dispensing, or volumetric dosing, to achieve specific product configurations.

The flat baked goods arrive from an oven, further upstream of the system of the present disclosure. An oven is a thermal processing unit used for baking dough or batter into finished products like the flat baked goods. Industrial ovens operate at controlled temperatures to ensure uniform baking, and the baked goods exit the oven at elevated temperatures before progressing to further processing stages. Hence, the goods already have a high temperature when exiting the oven and at the start the system of the present disclosure.

On the other end of the system of the present disclosure is typically a packaging device located. Packaging involves enclosing finished products to protect them from contamination and physical damage during storage and transportation. In high-volume manufacturing environments, packaging processes may include automated loading, wrapping, and sealing systems to maintain product integrity.

Active cooling refers to a process that employs mechanical or forced means to reduce the temperature of baked goods before or after the deposition of viscous edible material. Hence, contrary to ambient cooling, active cooling methods may include for example refrigerated airflow, conduction cooling plates, or cryogenic cooling. Active cooling is particularly advantageous in achieving rapid temperature reduction without relying on ambient conditions.

The control of temperature of the goods and edible is an important aspect of the present disclosure and differs per production process:
In the baking step the ovens typically operate at temperatures between 150°C and 230°C, depending on the product requirements.

In the post-baking cooling step the (flat) baked goods are cooled to ambient temperatures, generally between 20°C and 35°C, to stabilize their structure before being deposited with the edible.

At the deposition step, the viscous edible materials are applied at a controlled, elevated, processing temperature, typically in the range of 25°C to 35°C, ensuring appropriate and sufficient viscosity for deposition.

The post-deposition step involves cooling wherein the deposited, layered flat baked good is cooled to ensuring setting and adhesion of the edible material.

The edible material have a certain viscosity which refers to the internal resistance of a material to flow, which is a critical factor in deposition processes. Suitable viscosity ranges for edible materials generally fall between 1,000 and 10,000 centipoise (cP), depending on the specific product formulation. Proper viscosity control ensures that the material can be dispensed accurately without excessive spreading or structural collapse.

Adhesion between the viscous edible material and the flat baked good is required for product integrity. Factors that may influence adhesion include the composition of the flat baked good as well as its surface characteristics, e.g. the level of roughness of the surface, but also the deposition temperature, and the viscosity of the edible material. Effective adhesion ensures that the edible material remains securely attached to the baked good throughout handling, processing, packaging and afterwards.

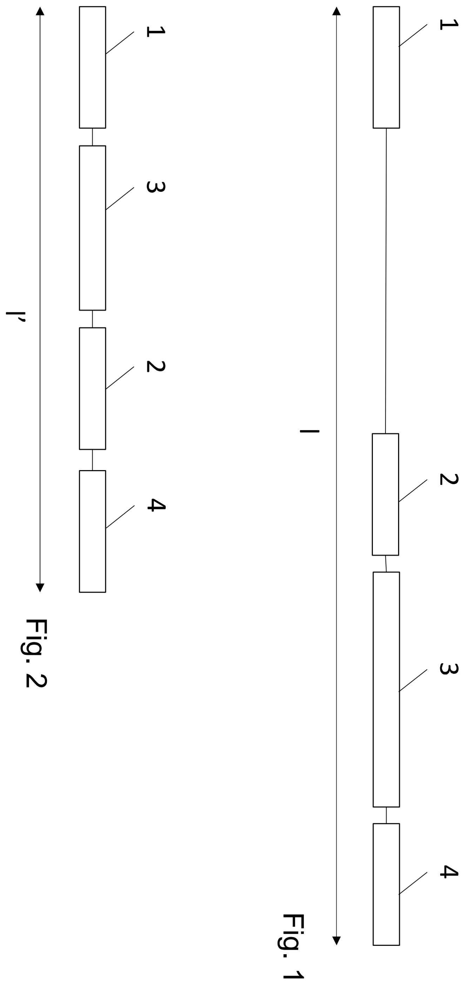

Fig. 1 represents different steps in a conventional production process for forming layered flat baked goods that combine flat baked goods with a viscous edible material. In these known processes, the flat baked goods exit from an oven and are transported by a conveyor to a deposition and optionally capping station where a layer of viscous edible material is applied. The edible material can be applied in various ways, including the deposition of patterns, layers, or dots of viscous edible material. In some cases, the deposition station may include a capping step in which, after deposition, a second baked good is placed on top to create a sandwich product. This process may be repeated several times to obtain for example 3 layers of flat baked goods with two layers of edible.

Fig. 1 represent a production process according to the prior art, in which conventional production processes there is a significant distance between the oven 1 and the deposition station 2, illustrated in Fig. 1 by the relative large distance between these two stations. This is because the baked goods leave the oven at an elevated temperature and need to cool down before deposition. The cooling process occurs passively by exposure to ambient air, typically bringing the baked goods to a temperature between 20°C and 35°C. The length of this passive cooling section increases both the processing time and the required space for the production line, leading to a large footprint in the manufacturing facility.

At the deposition station 2, the edible material is applied at a controlled temperature, typically between 25°C and 35°C, depending on its composition. The temperature is selected to ensure the edible material remains fluid enough for deposition but does not delay the setting process unnecessarily. Optionally, after deposition, if a sandwich product is to be formed, a second flat baked good is placed on top.

Once the edible material has been applied in the deposition station 2, it must solidify before further processing. This requires additional cooling, typically performed at an active cooling station 3. This cooling station reduces the temperature of the final product to allow handling and packaging. However, since the edible material is insulated by the surrounding baked goods, the cooling process is inefficient and energy-consuming. The result is increased processing time and a longer production line and high energy-consumption. Once the final product has reached its target temperature it can be further handled in a subsequent handling station 4, for example to prepare for packaging further downstream by a packaging machine.

The disadvantages of this conventional process include the need for a long processing line illustrated by length I in Fig. 1, slow cooling of the edible material, and increased energy consumption at post-processing cooling. The edible material takes a long time to solidify, as the baked goods retain heat and act as thermal insulators. The slow solidification process delays packaging and requires additional cooling energy.

It seems like an obvious solution to improve the conventional production method as shown in Fig. 1 by adding improving the active cooling step of the final product, so that they cool down faster to the desired ambient temperature of 20 - 30 degrees Celsius. It also does not seem obvious to add an extra active cooling step between the oven and the deposition as it introduces an extra step in the product process, which costs relatively much (cold) energy compared to cooling in the ambient air. Moreover, this has an influence on the solidification after deposition. After all, if the cookies have too little residual heat from the oven, the solidification process may proceed too quickly, which may result in less good adhesion. However, with the system according to the invention, a novel and surprising non-intuitive solution is offered in which, among others, the consistency and processing of cookies is improved by cooling not the edible, nor the final product but the cookies, before the deposition takes place, to such an extent that the edible is deposited at a controlled temperature to ensure efficient solidification and adherence to the cookie.

Fig. 2 illustrates the improved process according to an aspect of the present invention, which addresses these challenges by cooling the baked goods before deposition, rather than cooling the edible material after deposition. In this approach, after the goods exit from the oven station 1, the baked goods pass through an active cooling unit 3 which is now located between the deposition station 2 and the oven station 1. In the active cooling station, the goods are actively and rapidly cooled to a predefined reduced temperature before reaching the deposition station 2.

At the deposition station 2, the edible material is applied at a controlled and elevated processing temperature. The difference between the reduced temperature of the baked goods and the elevated temperature of the edible material induces rapid heat transfer upon deposition. This ensures the edible material sets quickly and adheres well to the baked goods without the need for extensive post-processing cooling. Once the final product has reached its target temperature it can be further handled in a subsequent handling station 4, similar to the production process of the prior art as illustrated in Fig.1. At the handling station 4, the final products can for example be prepared for packaging further downstream by a packaging machine. The further processing of the final product is however outside of the scope of the present invention.

In case of forming a sandwich product, the second flat baked good is also pre-cooled and placed on top of the deposited edible material. The combined cooling effect of both baked goods accelerates the solidification process of the edible material, eliminating the need for additional cooling before packaging.

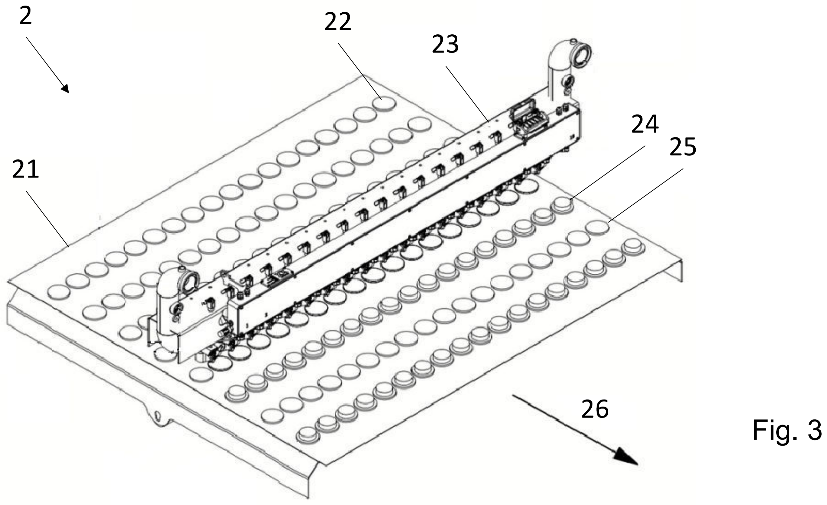

Fig. 3 provides a detailed view of a deposition means at the deposition station 2 which applies the edible material onto the pre-cooled baked goods. The deposition means may include a controlled nozzle, an extruder-based system, or a volumetric dispensing mechanism. The system may be configured to deposit the edible material in different patterns, such as swirls, strips, or localized dollops, depending on the desired product characteristics. The deposition means operate at a controlled elevated processing temperature to ensure the edible material maintains a predefined viscosity level suitable for deposition. The deposition process is synchronized with the conveyor system to ensure precise application of the edible material onto the baked goods. The goods 22 are actively cooled by active cooling means 3 located between these deposition means 2 and the oven 1, shown in Fig. 2 but not shown in this Fig. 3. By means of the active cooling 3, the goods will have a reduced temperature that is lower than the ambient temperature, which temperature may for example lie in the range of -5 to 20 degrees Celsius, preferably 0-15 degrees Celsius, and more preferably 0-10 degrees Celsius, and most preferably between 5 and 10 degrees Celsius. In case of sandwich production, the goods 22 are alternately provided with an edible by the deposition system 23 as illustrated in the Fig. 3. The deposition system 23 applies at a certain controlled processing temperature a layer, drop or certain controlled amount or volume of edible onto the goods of the odd rows 24. The goods from the even rows 25 can then be placed onto the goods from the odd rows 24 in a next step (not shown here) and in this way be capped and outfeed for further processing in direction 26 towards the next handling station 4.

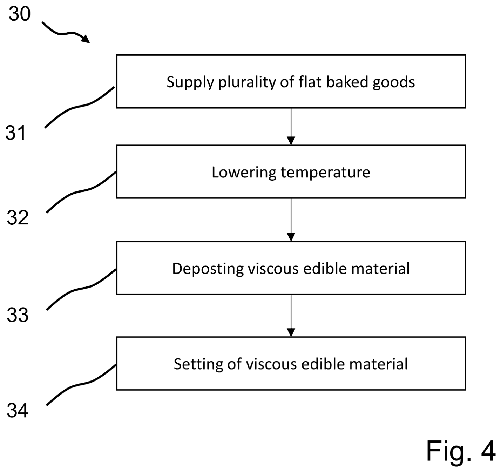

Fig. 4 shows a flowchart of a method 30 for producing layered flat baked goods. The method 30 includes supplying a plurality of flat baked goods on a conveyor 31, lowering the temperature of the baked goods to a predefined reduced temperature 32, and depositing the viscous edible material onto the baked goods at a controlled elevated processing temperature 33. The temperature difference between the baked goods and the edible material induces rapid heat transfer, accelerating the setting 34 of the edible material and enhancing adhesion to the baked goods.

By using this approach, the production process has several advantages over the production process of the prior art and illustrated in Fig. 1. The edible material sets more quickly, reducing the need for long cooling sections. The adhesion of the edible material to the baked goods is improved, reducing the risk of separation during further processing. The overall length of the production line is reduced, which is illustrated by the length I' shown in Fig. 2 which is shortened in relation to the length I in Fig. 1. The shortened length save both space in the production facility. The system also provides a more scalable and efficient solution for manufacturing layered flat baked goods while maintaining high product quality and consistency.

The present invention thus improves efficiency in forming layered flat baked goods by leveraging pre-cooling of the baked goods instead of cooling the edible material after deposition. The described system and method optimize heat transfer, reduce energy consumption, and enhance product quality by ensuring uniform and rapid solidification of the edible material.

This detailed description thoroughly explains the features, devices, and methods, ensuring it aligns with the rest of the application and provides practical examples where necessary.

Based on the above description, a skilled person may provide modifications and additions to the method and arrangement disclosed, which modifications and additions are all comprised by the scope of the appended claims.

It will be clear that the intention of the above description is to shed light on the working of possible embodiments of the present invention, and not to limit the scope of protection of the invention. Starting from the description, a person skilled in the art is able to conceive of and use various embodiments that fall within the inventive concept and scope of protection of the present invention.

## Claims

1. A system for forming layered flat baked goods (24 from at least one flat baked good (22), and a layer of viscous edible material deposited onto the flat baked good (22), the system comprising:
a first conveyor assembly (21), arranged for supplying a plurality of flat baked goods (22) and configured to lower (3) the temperature of the flat baked goods to a predefined reduced temperature;
a deposition means (23) for depositing the viscous edible material onto the flat baked goods, wherein the deposition means are configured to deposit the viscous edible material at a controlled elevated processing temperature to provide a predefined viscosity level of the deposited viscous edible material;
wherein the first conveyor assembly (21) is further configured to enable setting the reduced temperature of the flat baked goods (22) to a predefined value, to reflect a selected regulated temperature difference between the flat baked goods (22) and the viscous edible material, thereby inducing rapid heat transfer upon deposition to accelerate setting and enhance adhesion of the edible material to the flat baked goods (22).

2. The system of claim 1, wherein the predefined reduced temperature of the flat baked goods (22) is within a range of 5°C to 15°C to ensure rapid heat transfer to the viscous edible material (30).

3. The system of claim 2, wherein the controlled elevated processing temperature of the viscous edible material is in a range of 25°C to 35°C, thereby maintaining an optimal viscosity for deposition while ensuring effective setting upon contact with the flat baked goods (22).

4. The system of claim 1, wherein the first conveyor assembly (21) includes an active cooling unit (3) that utilizes forced air circulation, cryogenic cooling, or a refrigerated cooling plate to achieve the predefined reduced temperature, and wherein preferably the active cooling unit is configured to cool the flat baked goods (22) while they are conveyed on the first conveyor assembly (110), thereby ensuring uniform temperature reduction prior to deposition.

5. The system of claim 1, wherein the deposition means (23) includes a controlled nozzle or shaping guide configured to regulate the spread of the viscous edible material upon deposition, thereby maintaining a defined shape on the flat baked goods (22), and wherein preferably the deposition means (23) is further configured to adjust the deposition speed, pressure, or flow rate to control the penetration depth of the viscous edible material (30) into porous baked goods, ensuring a controlled layer thickness and improved texture of the final product.

6. The system of claim 1, further comprising a second conveyor assembly arranged to supply a second flat baked good (25), wherein the second flat baked good (25) is also cooled to a predefined reduced temperature and is placed onto the deposited viscous edible material to form a sandwich product.

7. The system of claim 6, wherein the second conveyor assembly is synchronized with the first conveyor assembly to ensure precise alignment of the second flat baked good (25) onto the deposited viscous edible material, or wherein the combined cooling effect of the first and second flat baked goods induces uniform setting of the viscous edible material without requiring additional cooling post-sandwich formation.

8. The system of claim 1, wherein the deposition means (23) further comprises a rotary, extruder-based, or volumetric dispensing mechanism to ensure precise and consistent application of the viscous edible material onto the flat baked goods.

9. The system of claim 1, wherein the deposition means (23) is further configured to deposit the viscous edible material in a predefined pattern, including swirls, strips, or localized dollops, to enhance product aesthetics and functionality.

10. The system of claim 1, wherein the first conveyor assembly (21) includes a temperature sensor and a feedback control unit configured to monitor and maintain the reduced temperature of the flat baked goods (22) during processing.

11. The system of claim 1, wherein the first conveyor assembly (1) further comprises a plurality of cooling zones, each configured to progressively reduce the temperature of the flat baked goods (22) to the predefined reduced temperature, thereby ensuring consistent cooling before deposition.

12. The system of claim 1, further comprising a secondary conveyor section positioned downstream of the deposition means (23), configured to maintain the formed cookies (10) at ambient conditions or direct them towards a packaging unit, thereby eliminating the need for additional cooling equipment post-deposition.

13. A method for forming layered flat baked goods (10) from at least one flat baked good (22) and a layer of viscous edible material deposited on the flat baked good (22), the method comprising the steps of:
supplying a plurality of flat baked goods (22) on a first conveyor assembly (21);
lowering the temperature of the flat baked goods (22) to a predefined reduced temperature;
depositing the viscous edible material onto the flat baked goods (22) using a deposition means (23), wherein the edible material is deposited at a controlled elevated processing temperature selected to provide a predefined viscosity level suitable for deposition;
setting the reduced temperature of the flat baked goods (22) to a predefined value to reflect a selected regulated temperature difference between the flat baked goods (22) and the viscous edible material by inducing rapid heat transfer from the viscous edible material to the flat baked goods (22) upon deposition to accelerate setting and enhance adhesion of the edible material to the flat baked goods (22).

14. A deposition means (23) for depositing a viscous edible material onto a flat baked good (22), the deposition means comprising:
a dispensing unit configured to deposit the viscous edible material onto the flat baked goods (22);
a temperature control system arranged to maintain the viscous edible material at a controlled elevated processing temperature selected to provide a predefined viscosity level suitable for deposition;
wherein the deposition means (23) is configured to cooperate with a conveyor assembly of the system of claim 1, for the conveyor assembly to supply flat baked goods (22) at a predefined reduced temperature to induce rapid heat transfer upon deposition, thereby accelerating setting and enhancing adhesion of the edible material to the flat baked goods (22).

15. A conveyor assembly (21) for supplying flat baked goods (22) in a system for forming layered flat baked goods (10) according to claim 1, the conveyor assembly comprising:
a transport mechanism arranged for conveying a plurality of flat baked goods (22) to a deposition area;
a cooling unit configured to lower the temperature of the flat baked goods (22) to a predefined reduced temperature;
a control system configured to enable setting the reduced temperature of the flat baked goods (22) to a predefined value to reflect a selected regulated temperature difference between the flat baked goods (22) and a viscous edible material to be deposited thereon, and wherein the conveyor assembly (110) is configured to induce rapid heat transfer from the viscous edible material to the flat baked goods (22) upon deposition, thereby accelerating setting and enhancing adhesion of the edible material to the flat baked goods (22).
